# EUROPÄISCHE PATENTSCHRIFT

(11) **EP 0 626 095 B1**
(45) Veröffentlichungstag und Bekanntmachung des Hinweises auf die Patenterteilung: **04.03.1998**
(21) Anmeldenummer: 93901756.2
(22) Anmeldetag: 24.12.1992
(51) Int. Cl.: G11B 27/00, G11B 15/68, G11B 27/11, G11B 23/023, G11B 23/04, G11B 23/087, G11B 23/30

(54) **STÄNDER MIT FÄCHERN FÜR AUFZEICHNUNGSTRÄGER ENTHALTENDE KASSETTEN**
SUPPORT WITH COMPARTMENTS FOR CASSETTES CONTAINING RECORDING MEDIA
SUPPORT A COMPARTIMENTS POUR CASSETTES CONTENANT DES SUPPORTS D'ENREGISTREMENT

(30) Priorität: 14.02.1992 DE 4204402; 06.03.1992 DE 4207211
(43) Veröffentlichungstag der Anmeldung: 30.11.1994
(73) Patentinhaber: DEUTSCHE THOMSON-BRANDT GMBH, 78048 Villingen-Schwenningen (DE)
(72) Erfinder: SPILLE, Jens, D-30880 Laatzen 1 (DE); SCHRÖDER, Ernst, F., D-3000 Hannover 51 (DE); PLATTE, Hans-Joachim, D-30966 Hemmingen (DE); GEIGER, Erich, A., D-78029 Unterkirnach (DE)
(86) Internationale Anmeldenummer: EP9202992
(87) Internationale Veröffentlichungsnummer: WO9316475

(56) Entgegenhaltungen:
- EP-A- 0 346 979
- WO-A-91/02355
- BE-A- 886 928
- NL-A- 7 901 801
- US-A- 4 426 684
- US-A- 4 839 875
- US-A- 4 872 151
- PATENT ABSTRACTS OF JAPAN vol. 9, no. 221 (P-386)7. September 1985
- PATENT ABSTRACTS OF JAPAN vol. 10, no. 254 (P-492)30. August 1986

## Beschreibung

Die Erfindung geht aus von einer Kassette gemäß dem Oberbegriff 1. Es ist bekannt, Videokassetten oder Audiokassetten nebeneinander oder übereinander in einzelnen Fächern eines Ständers zumeist mit einem Beschriftungsetikett nach vorne abzustellen. Die Auswahl einer bestimmten Kassette oder das Auffinden einer bestimmten Aufnahme ist oftmals mühsam, zumal die Zahl der Kassetten meist groß ist und auf dem sichtbaren Etikett nur wenige Informationen untergebracht werden können.

Der Erfindung liegt die Aufgabe zugrunde, bei einem derartigen, eine Vielzahl von Kassetten enthaltenden Ständer das Auffinden einer bestimmten Kassette oder einer bestimmten Aufnahme zu erleichtern. Diese Aufgabe wird durch die im Anspruch 1 angegebene Erfindung gelöst. Vorteilhafte Weiterbildungen der Erfindung sind in den Unteransprüchen angegeben.

Aus der DE 34 35 506 A1 ist es zur Speicherung von codierten Informationen über Herstellungdatum, Gerätetyp und/oder Inhalt bekannt, einen Gegenstand - der z. B. eine Geräteeinheit, Kassette oder Verpackung sein kann - mit einer Halbleiterschaltung zu versehen, dessen Anschlüsse für Adressierung und Inforamtionsübertragung mit abtastbaren Kontaktflächen verbunden sind.

Aus der EP 275 657 A1 ist es bekannt, optische Übertragungsmittel zwischen einer in einem Behälter befindlichen optischen Karte mit einem Halbleiterspeicher und einem externen Gerät vorzusehen.

Bei der erfindungsgemäßen Lösung ist ein an sich bekannter, an dem Kassettengehäuse angebrachter Halbleiterspeicher, der bislang nur vom Recorder oder einem davon getrennten speziellen Lesegerät gelesen wurde, in vorteilhafter Weise für eine neuartige Aufgabe ausnutzbar. Der Speicher kann jetzt zusätzlich dazu dienen, aus einer Vielzahl von abgestellten Kassetten eine bestimmte Kassette oder eine bestimmte gesuchte Aufnahme herauszufinden. Dadurch wird der Zeitaufwand für das Auffinden einer bestimmten Kassette oder Aufnahme beträchtlich verringert. Eine definierte Zuordnung einer Kassette zu einem bestimmten. Fach des Ständers ist nicht erforderlich, weil beim Einschieben der Kassette in das Fach jedesmal der Speicher der Kassette gelesen und die Steuereinheit oder ein Zentralspeicher entsprechend aktualisiert wird. Vorzugsweise werden alle in dem Speicher jeder Kassette enthaltene Informationen über die auf der betreffenden Kassette vorhandenen Aufnahmen in einen zentralen Speicher übertragen, so daß eine beliebige Aufnahme nach bestimmten Suchkriterien automatisch gefunden werden kann.

Das Suchkriterium kann sich allgemein z.B. auf ein Aufnahmedatum, einen bestimmten Titel, einen Urlaubsort oder ein Ereignis beziehen, z.B.
Norwegen Nr. 11
Film "Der Pauker"
Dinner for one
Komödie mit R. Platte
Opas Beerdigung
Firmengeschichte von TELEFUNKEN

Das Suchkriterium kann sich auch auf das Datum einer Aufnahme beruhen, z.B. am 10.02.92, vor dem 10.02.92 oder nach dem 10.02.92.

Dem Bedienfeld ist vorzugsweise ein Mikroprozessor zugeordnet, der nach der Eingabe der Daten einer gesuchten Aufnahme mittels Bedienfeld über einen Zentralspeicher ermittelt, welches Fach eine Kassette mit dieser Aufnahme enthält. Daraufhin wird an dem Ständer oder an dem Bedienfeld eine elektrische, vorzugsweise optische oder mechanische Anzeige ausgelöst. Diese zeigt dem Bedienenden an, in welchem Fach sich die Kassette mit der gesuchten Aufnahme befindet. Das Bedienfeld kann auch ein Display enthalten, mit dem alle Aufnahmen der insgesamt in dem Ständer enthaltenen Kassetten oder alle Aufnahmen, die dem Suchkriterium entsprechen, angezeigt werden, entweder gleichzeitig oder zeitlich nacheinander für einzelne oder mehrere Kassetten. Der Bedienende kann sich dann schnell einen Überblick verschaffen, welche Aufnahmen insgesamt verfügbar sind, oder er kann bei mehreren angebotenen Aufnahmen seine endgültige Auswahl treffen.

Wird damit eine individuelle Kassette mit der gewünschten Aufnahme identifiziert, so kann der Mikroprozessor auch Daten über die Lage der gewählten Aufnahme auf dem Aufzeichnungsträger in den Speicher an der Kassette übertragen, bevor die Kassette dem Ständer entnommen wird. Wenn dann die Kassette dem Recorder zugeführt wird, kann der Recorder durch Lesen des Speichers der Kassette feststellen, welchen Vorlauf oder Rücklauf er zu tätigen hat, um die gewünschte Aufnahme zu finden. Die Kassette wird dann in dem Recorder nach dem Einlegen selbsttätig an den Beginn der gewünschten Aufnahme vor- oder zurückgespult.

Es ist auch möglich, den Ständer mit einer Mechanik zu versehen, die selbsttätig den Auswurf einer gewählten Kassette auslöst. Ebenso ist es möglich, über mechanische Umlenkmittel die ausgewählte und ausgeworfene Kassette automatisch dem Aufnahmefach des Recorders zuzuführen. Dies ist besonders vorteilhaft, wenn der Ständer, das Bedienfeld und der Videorecorder eine bauliche Einheit bilden.

Die Erfindung wird im folgenden anhand der Zeichnung erläutert. Darin zeigen
- Fig. 1: den Ständer, das Bedienfeld und den Recorder und
- Fig. 2: die Kontaktierung einer Kassette in einem Fach des Ständers.
- Fig.3-5: Kassetten nach der Erfindung

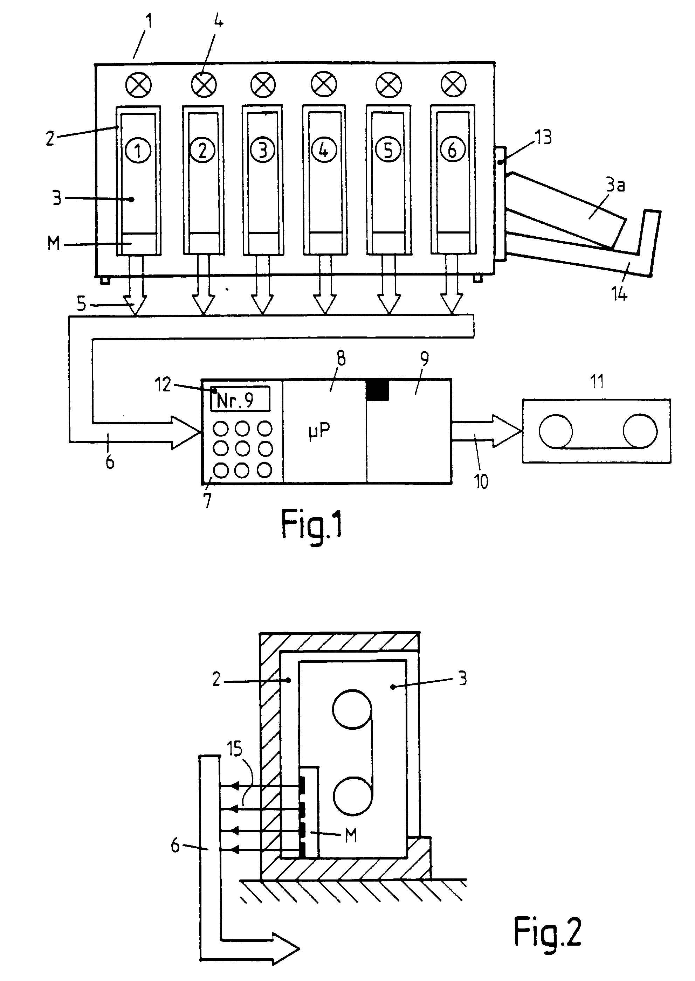

Fig. 1 zeigt den Ständer 1 mit einer Vielzahl von Fächern 2, in denen Kassetten 3 abgestellt sind. Jedem Fach 2 ist eine optische Anzeige 4 in Form einer LED zugeordnet. Jede Kassette 3 ist mit einem Halbleiterspeicher M versehen, in dem Daten über den Inhalt der Kassette, also die einzelnen auf der Kassette befindlichen Aufnahmen gespeichert sind. Jedes Fach 2 enthält Kontakte, die beim Einschieben der Kassette 3 in das Fach 2 selbsttätig mit Kontakten des Speichers M der Kassette 3 zusammenwirken. Jedes Fach 2 ist über eine Datenleitung 5 an den Datenbus 6 angeschlossen. Der Datenbus 6 ist an das Bedienfeld 7 angeschlossen, dem der Mikroprozessor 8 und der Zentralspeicher 9 zugeordnet sind. Die Einheit 7, 8, 9 ist über den Datenbus 10 mit dem Videorecorder 11 verbunden.

Wenn eine Kassette 3 in ein beliebiges Fach 2 eingeschoben und der Speicher M automatisch durch die Datenleitung 5 kontaktiert wird, werden die in dem Speicher M enthaltenen Informationen gelesen und dem Zentralspeicher 9 zugeführt. In dem Zentralspeicher 9 sind somit alle Daten darüber gespeichert, welche Aufnahmen auf den einzelnen Kassetten enthalten sind.

Wenn der Bedienende eine bestimmte Aufnahme sucht, z.B. nach einem der eingangs genannten Suchkriterien, wird dieses Suchkriterium über das Bedienfeld 7 manuell eingegeben. Daraufhin bewirkt der Mikroprozessor 8 eine Abfrage des Zentralspeichers 9, auf welcher Kassette die gewünschte, in das Bedienfeld 7 eingegebene Aufnahme enthalten ist. Daraufhin wird die optische Anzeige 4 des Faches 2 aktiviert, die die Kassette mit der gewünschten Aufnahme enthält. Der Bedienende kann dann die Kassette 3 dem Fach 2 entnehmen und in den Recorder einlegen. Ebenso kann auf einem Display 12 des Bedienfeldes 7 angezeigt werden, in welchem Fach sich die Kassette mit der gewünschten Aufnahme befindet.

Der Ständer 1 enthält einen Auswurf 13 und mechanische Mittel, die selbsttätig die ermittelte Kassette 3a mit der gewünschten Aufnahme auswerfen, wodurch diese in das Aufnahmefach 14 gleitet und dort vom Bedienenden entnommen werden kann.

Mit dem Display 12 können durch eine entsprechende Bedienung des Bedienfeldes 7 gleichzeitig oder zeitlich nacheinander alle Aufnahmen der in dem Ständer 1 enthaltenen Kassetten 3 angezeigt werden. Der Bedienende kann sich dann schnell einen Überblick verschaffen, welche Aufnahmen in der Gesamtzahl der Kassetten überhaupt verfügbar sind, oder er kann eine individuelle Auswahl unter mehreren, ein Suchkriterium erfüllenden Aufnahmen treffen.

Bei der Auswahl einer Kassette mit der gewünschten Aufnahme wird von der Einheit 7, 8, 9 in den Speicher M eingeschrieben, an welcher Stelle des Aufzeichnungsträgers sich die gewünschte Aufnahme befindet. Wenn jetzt die ausgewählte Kassette 3 in den Recorder 11 gelangt, wird der Speicher M gelesen. Der Recorder 11 hat jetzt die Information, an welcher Stelle des Aufzeichnungsträgers sich die gewünschte Aufnahme befindet. Der Recorder 11 kann dann selbsttätig auf den Anfang der ausgewählten Aufnahme vor- oder zurückspulen.

Fig. 2 zeigt ein Fach 2 mit einer eingeschobenen Kassette 3. Das Fach 2 enthält einen Kontaktfedersatz 15, der selbsttätig mit Kontakten an dem Speicher M der Kassette 3 zusammenwirkt. Der Kontaktfedersatz ist an den Datenbus 6 angeschlossen, der wie in Fig. 1 mit der Einheit 7, 8, 9 verbunden ist. Vorzugsweise sind an dem Speicher M vier Kontakte und entsprechende Kontaktfedern vorgesehen, und zwar für Erde, Betriebsspannung, Schreibeingang und Leseausgang.

Die Bedienung kann auch über eine Fernbedieneinheit erfolgen, die drahtlos mit dem Ständer und/oder dem Recorder 11 zusammen arbeitet. Der Ständer 1, die Einheit 7, 8, 9 und der Recorder 11 können dann über eine gemeinsame Fernbedieneinheit verbunden sein, so daß Verbindungsmittel wie Leitungen und Datenbusse zwischen diesen Einheiten auch entfallen können. Die Kommunikation zwischen Ständer 1, Einheit 7, 8, 9 und Recorder erfolgt dann auf drahtlosen Wege mittel einer Fernbedieneiheit.

Die Erfindung löst sich von der bisherigen Annahme, daß die Kassette für den Lesevorgang des eingebauten Halbleiterspeichers der Schutzhülle entnommen werden muß. Stattdessen wird erreicht, daß der Speicher an der Kassette durch die Schutzhülle hindurch gelesen werden kann. Für den Lesevorgang ist es dann nicht mehr notwendig, die Kassette aus der Schutzhülle herauszunehmen. Das ist besonders vorteilhaft, wenn z.B. während eines Urlaubs eine Vielzahl von in Schutzhüllen befindlichen Kassetten durch Lesen des Speichers ausgewertet, sortiert oder identifiziert werden sollen. Es entfällt dann das Herausnehmen der Kassette aus der Schutzhülle. Außerdem wird vermieden, daß die Schutzhülle ohne Kassette herumliegt oder verlorengeht. Ein weiterer Vorteil besteht darin, daß die Schutzfunktion der Schutzhülle für die Kassette, insbesondere gegen Eindringen von Staub und unsachgemäße Berührung, während des Lesevorgangs des Halbleiterspeichers nicht unterbrochen wird. Die durch die Schutzhülle auf die Kontakte des Halbleiterspeichers auftreffenden Kontaktfedern können zusätzlich eine Halterung oder Arretierung der Kassette mit der Schutzhülle an dem Gerät bewirken. Die federnden Kontakte sind dann so ausgebildet, daß sie beim Einschieben der Schutzhülle mit der darin enthaltenen Kassette in Löcher oder Öffnungen in der Wandung der Schutzhülle einrasten und auf die Kontakte des Speichers auftreffen. Das Herausziehen der Schutzhülle aus der Einrichtung ist dann nur mit einer gewissen Kraft möglich, wodurch die Kontaktfedern wieder aus den Öffnungen herausgelangen und die Schutzhülle freigeben. Die Anordnung kann so getroffen sein, daß bei der Kontaktgabe zwischen den Kontaktfedern und den Kontakten des Speichers kein Schleifvorgang auftritt, sondern die Kontaktfedern wie ein Nadelkontakt etwa senkrecht auf die Kontakte auftreffen. Das ist besonders vorteilhaft bei heute verwendeten Halbleiterchips, bei denen die Kontaktflächen eine dünne Goldauflage von wenigen µm Dicke tragen, die durch wiederholte Schleifvorgänge einer Kontaktfeder einem starken Verschleiß unterworfen wären. Die Löcher oder Öffnungen in der Schutzhülle können so klein sein, daß ein nennenswertes Eindringen von Staub verhindert wird. Die Löcher brauchen z.B. nur eine Abmessung von etwa 1x2 mm zu haben.

Vorzugsweise sind in der Wandung der Schutzhülle nicht Löcher oder eine längliche Öffnung vorgesehen, sondern die Kontaktierung erfolgt elektrisch durch die Wand der Schutzhülle hindurch. Das läßt sich z.B. erreichen durch einen bekannten sogenannten Zebra-Connector. Dieser ist ein Gummistreifen, in den in Abständen von der einen zur anderen Seite reichende Brükken aus Leitgummi eingebettet sind. Die Brücken aus Leitgummi bilden somit kleine, durch die Gummiteile voneinander isolierte Leiter von der einen Oberfläche zur gegenüberliegenden Oberfläche des Connectors. Ein Vorteil eines derartigen Zebra-Connectors besteht darin, daß er nachgiebig ist und sich an Unebenheiten und geneigte Oberflächen der Kontaktflächen selbsttätig anpaßt. Bei Anwendung eines derartigen Zebra-Connectors kann auf Öffnungen in der Wandung der Schutzhülle gänzlich verzichtet werden, so daß ihre Schutzfunktion gar nicht beeinträchtigt wird.

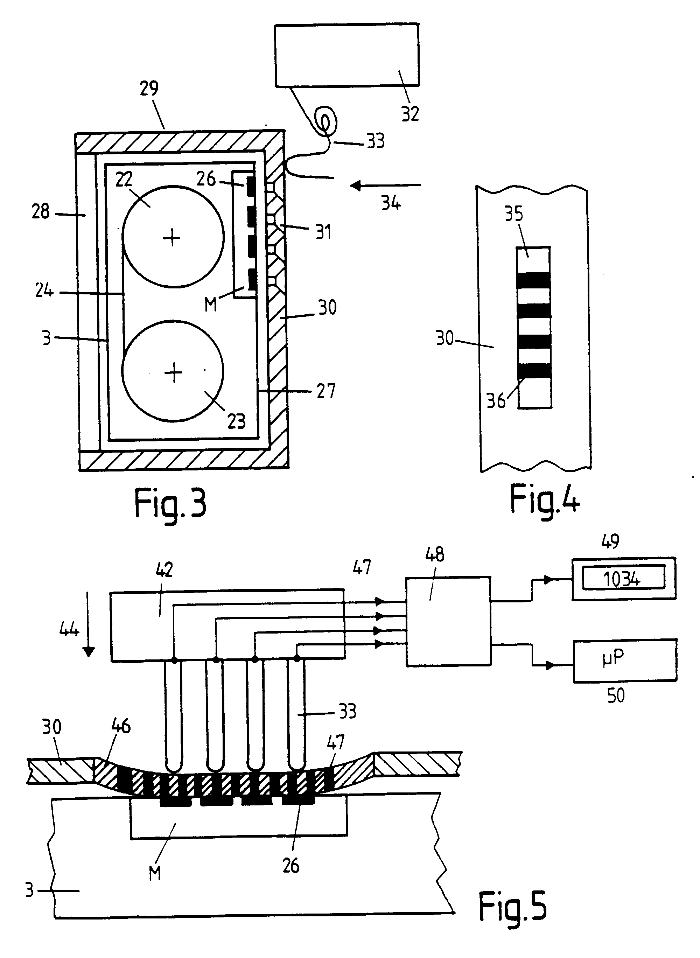

Fig. 3 zeigt eine Kassette 3 mit zwei darin drehbar gelagerten Bandspulen 22, 23, dem Magnetband 24 und dem eingebauten Halbleiterspeicher M, dessen vier Kontakte 26 an der Oberfläche 27 der Kassette 3 liegen. Die Kassette 3 ist in die aus Kunststoff oder Pappe bestehende Schutzhülle 29 von deren offenen Ende 28 eingesteckt. Die Wand 30 der Schutzhülle 29 ist im Bereich der Kontakte 26 mit vier Öffnungen 31 versehen. Ein Teil 32 an dem mit dem Speicher M zusammen arbeitenden Gerät, z.B. einem Ständer oder einem Lesegerät, trägt vier den Löchern 31 und den Kontakten 26 zugeordnete Kontaktfedern 33, die in der Zeichnung als sich quer zur Zeichenebene erstreckend zu denken sind.

Die Schutzhülle 29 wird zusammen mit der eingelegten Kassette 3 in eine Einrichtung, z.B. einen Ständer oder ein Lesegerät eingeschoben. Dabei gleiten die Kontaktfedem 33 unter Federwirkung zunächst an der Oberfläche der Wand 30 entlang. In der endgültigen Stellung der Kassette 3 rasten die Kontaktfedern 33 aufgrund der Federwirkung in die Öffnungen 31 ein und gelangen so in Kontakt mit den Kontakten 26 des Speichers M. Auf diese Weise wird der Speicher M kontaktiert, so daß die in dem Speicher M enthaltenen Informationen über kassettentypische Daten oder aufgezeichnete Stücke von einem in der Einrichtung befindlichen Prozessor gelesen, angezeigt oder ausgewertet werden können. Durch das Eingreifen der Kontaktfedern 33 in die Öffnungen 31 wird gleichzeitig eine Arretierung der Kassette 3 in der Einrichtung bewirkt. Wenn die Kassette von Hand aus der Einrichtung herausgenommen wird, kommen die Kontaktfedern 33 durch ihre Federwirkung selbsttätig von den Öffnungen 31 frei. Dadurch, daß die Kontaktfedern 33 in Richtung 34 etwa senkrecht auf die Kontakte 6 auftreffen, wird in vorteilhafter Weise keine Schleifbewegung zwischen den Kontaktfedern 33 und den Kontakten 26 durchgeführt. Das ist vorteilhaft, weil derartige Kontakte 26 eines Halbleiterchip in allgemeinen mit einer dünnen Goldauflage von einigen µm Dicke versehen sind, die schon bei einer geringen Schleifbewegung durch eine Kontaktfeder zerstört werden kann. Die Kontaktfedern 33 bilden mit den Kontakten 26 dabei sogenannte Nadelkontakte.

In Fig. 4 ist in der Wand 30 der Schutzhülle 29 anstelle der vier Löcher 31 von Fig. 3 eine durchgehende längliche Öffnung 35 vorgesehen, durch die alle vier Kontaktfedern 33 hindurchgreifen und mit den Kontakten 26 des Speichers M in Kontakt gelangen können. Eine derartige Öffnung von z.B. 15 mm Länge und 1 - 2 mm Breite kann so klein gehalten werden, daß ein Eindringen von Staubteilen weitestgehend verhindert ist.

In Fig. 5 ist in die Wand 30 der Schutzhülle 29 im Bereich des Speichers M ein sogenannter Zebra-Connector 46 eingesetzt. Ein darartiger Connector 46 besteht aus einem an sich nichtleitenden Gummi, in das eine Vielzahl von Brücken 47 aus Leitgummi eingebettet ist. Die Brücken 47 erstrecken sich jeweils von der einen Oberfläche zur gegenüberliegenden Oberfläche des Connectors 46. Der Connector 46 stellt ein nachgiebiges, verformbares Teil dar, das in der Lage ist, eine Vielzahl voneinander unabhängiger Kontakte zwischen den beiden gegenüberliegenden Oberflächen zu bilden. Durch Bewegung des Teiles 42 an dem Ständer oder dem Lesegerät in Richtung 44 oder durch reine Federwirkung der Kontaktfedern 33 gelangen die Enden der Kontaktfedern 33 auf die Oberfläche des Connectors 46. Durch die Nachgiebigkeit des Connectors 46 wird dieser auf die die Kontakte 26 enthaltende Oberfläche des Speichers M gedrückt. Die Brücken 47 aus Leitgummi sind so bemessen und so eng angeordnet, daß wenigstens immer eine Brücke 47 gleichzeitig in Kontakt mit einer Kontaktfeder 33 und einem Kontakt 26 gelangt, andererseits aber keine Brücke 47 zwei Kontaktfedern 33 oder Kontakte 26 kurzschließt. Auf diese Weise wird also eine sichere Kontaktgabe zwischen den Kontakten 26 und den Kontaktfedern 33 hergestellt. Die Lösung hat den Vorteil, daß trotz der erzielten Kontaktgabe die Schutzhülle 29 hermetisch abgeschlossen bleibt. Die Kontaktfedern 33 sind über Leitungen 47 an die Auswertschaltung 48 des Ständers oder Lesegerätes angeschlossen. Die Auswertschaltung 48 steuert unter anderem ein Display 49 zur Anzeige von kassettentypischen Daten und den Mikroprozessor 50, der von den gelesenen Kassettendaten abhängige mechanische oder elektrische Funktion steuert. Dieses können z.B. sein die Anzeige einer gesuchten Kassette, das Darstellen von indem Speicher M enthaltenen Informationen, ein mechanischer Auswurf der Kassette aus einem Ständer und dgl. Im allgemeinen kann die Kassette in verschiedenen Lagen in die Schutzhülle 29 eingesteckt werden. Damit die Kontaktierung der Kontakte 26 von außen immer möglich ist, ist die Schutzhülle 29 an allen Stellen, wo je nach Einstecklage der Speicher M mit den Kontakten 26 liegen kann, mit den beschriebenen Löchern 31 Öffnungen 35 oder dem Connenctor 46 versehen.

## Patentansprüche

1. Kassette mit einem Aufzeichnungsträger sowie einem am Kassettengehäuse angeordneten Halbleiterspeicher für kassettentypische Daten, dessen Kontakte durch den Kontaktsatz einer die Daten auswertenden Einrichtung kontaktierbar sind, **dadurch gekennzeichnet**, daß die Kassette (3) in einer Schutzhülle (29) lagert und die Schutzhülle (29) im Bereich des Speichers (M) Mittel (31, 35, 36) aufweist, durch die die Kontakte (26) von außen durch den Kontaktsatz (33) kontaktierbar sind (Fig. 3).

2. Kassette nach Anspruch 1, **dadurch gekennzeichnet**, daß die Wand (30) der Schutzhülle (29) eine Vielzahl von den Kontakten (26) zugeordneten Löchern (31) aufweist und/oder die Wand (30) der Schutzhülle (29) eine längliche Öffnung (35) aufweist, die sich über mehrere oder alle in einer Reihe liegende Kontakte (26) erstreckt (Fig. 4).

3. Kassette nach Anspruch 2, **dadurch gekennzeichnet**, daß die Löcher (31) oder Öffnungen (35) so bemessen sind, daß an der Einrichtung vorgesehene federnde Kontaktfinger (33) durch die Federwirkung in die Löcher (31) oder Öffnungen (35) eingreifen und auf die Kontakte (26) auftreffen.

4. Kassette nach Anspruch 1, **dadurch gekennzeichnet**, daß in die Wand (30) der Schutzhülle (29) ein Teil (46) aus einem Zebra-Connector eingesetzt ist (Fig. 5).

## Claims

1. Cassette including a recording medium and a semiconductor memory for items of data that are typical of the cassette, said semiconductor memory being disposed on the cassette housing and its contacts being contactable by the contact set of a device for evaluating the items of data, characterised in that, the cassette is stored in a protective sleeve (29) and the protective sleeve (29) comprises means (31, 35, 36) in the vicinity of the memory (M) by means of which the contacts (26) can be contacted externally by the contact set (33) (Fig. 3).

2. Cassette in accordance with Claim 1, characterised in that, the wall (30) of the protective sleeve (29) comprises a plurality of holes (31) which are associated with the contacts (26) and/or the wall (30) of the protective sleeve (29) comprises an elongated opening (35) which extends over several or all of the contacts (26) located in a row (Fig. 4).

3. Cassette in accordance with Claim 2, characterised in that, the holes (31) or openings (35) are dimensioned such that resilient contact fingers (33) provided on the device engage in the holes (31) or openings (35) by virtue of their springiness and impinge on the contacts (26).

4. Cassette in accordance with Claim 1, characterised in that, a part (46) consisting of a Zebra-connector is inserted into the wall (30) of the protective sleeve (29) (Fig. 5).

## Revendications

1. Cassette avec un support d'enregistrement, ainsi qu'une mémoire à semiconducteurs pour données spécifiques à la cassette disposée sur le boîtier de la cassette, dont les contacts peuvent être connectés au jeu de contacts d'un dispositif analysant ces données, caractérisée en ce que la cassette (3) est logée dans une enveloppe protectrice (29) et en ce que l'enveloppe protectrice (29) présente des moyens (31, 35, 36) dans le secteur de la mémoire (M), grâce auxquels les contacts (26) peuvent être contactés de l'extérieur par le jeu de contacts (33) (figure 3).

2. Cassette selon la revendication 1, caractérisée en ce que la paroi (30) de l'enveloppe protectrice (29) présente une multitude de trous (31) affectés aux contacts (26) et/ou en ce que la paroi (30) de l'enveloppe protectrice (29) présente une ouverture oblongue (35) qui s'étend sur plusieurs ou tous les contacts (26) disposés sur une rangée (figure 4).

3. Cassette selon la revendication 2, caractérisée en ce que les trous (31) ou les ouvertures (35) sont dimensionnés de telle sorte que des doigts de contact (33) élastiques prévus sur le dispositif s'enclenchent dans les trous (31) ou ouvertures (35), grâce à l'effet résilient et rencontrent les contacts (26).

4. Cassette selon la revendication 1, caractérisée en ce qu'une pièce (46) composée d'un connecteur zébra est insérée dans la paroi (30) de l'enveloppe protectrice (29) (figure 5).
